# EUROPEAN PATENT SPECIFICATION

(11) **EP 1 172 237 B1**
(45) Date of publication and mention of the grant of the patent: **10.05.2006**
(21) Application number: 01660123.9
(22) Date of filing: 26.06.2001
(51) Int. Cl.: B60C 23/04

(54) **System and method for converting and communicating operational characteristics of tires**
Vorrichtung und Verfahren zur Umwandlung und Kommunikation von Betriebseigenschaften eines Reifens
Système et méthode pour convertir et communiquer les caractéristiques opérationnelles de pneumatiques

(30) Priority: 26.06.2000 US 603996; 02.05.2001 US 846388; 18.06.2001 US 881758
(43) Date of publication of application: 16.01.2002
(73) Proprietor: Nokian Tyres PLC., 37100 Nokia (FI)
(72) Inventor: Laitsaari, Juha, 33420 Tampere (FI); Hakanen, Jukka, 33270 Tampere (FI)
(74) Representative: Brax, Matti Juhani

(56) References cited:
- WO-A-99/61265
- DE-A- 19 632 150
- GB-A- 2 344 232
- US-A- 4 731 769
- US-A- 5 442 553
- US-A- 5 825 283
- US-A- 5 844 473

## Description

### Field of the Invention

The present invention is directed to tires, and specifically to tires that can transmit information regarding the characteristics thereof to a mobile communications device being carried by a user.

### Background of the Invention

A vehicle such as for example an automobile usually has mounted thereto a set of tires. These tires are the only means by which the vehicle makes contact with the road. And when the vehicle is traveling at a high speed, it is imperative that the operational characteristics of the tires be maintained above a given standard so as to avoid accidents and potential injury to the driver and passengers, if any, of the vehicle.

The prior art teaches the incorporation of sensors, either to the tire proper or in proximity thereof, for measuring an operational parameter of the tire. Once the parameter is measured, it is transmitted to a terminal at a remote location, such as for example a maintenance facility, or to a monitor fixedly mounted to the vehicle. Such prior art teachings are disclosed for example in US-patents 5 825 286, 5 731 754, 5 731 516, 5 585 554, 5 540 092, 5 741 966, 5 472 938 and 5 825 283, as well as in DE-A-19632150.

In particular, the prior art teaches that particular types of interrogators and transmitters have to be designed for a remotely located facility in order for the remote facility to receive information from the tires of the vehicle. And in order to be able to provide information relating to the tires to the driver of the vehicle, a special apparatus has to be either incorporated to the vehicle during its manufacture, or retrofitted thereto after the vehicle has been placed into service. Needless to say, such apparatus specifically designed for receiving the information from the tires are bulky and expensive.

The prior art furthermore does not teach the provisioning of information relating to the tires of a vehicle to the user of the vehicle, when the user is away from the vehicle. Nor does the prior art teach communication among the tires.

It is therefore an objective of the present invention to provide an economical way for a user to mobilely monitor the operational characteristics of the tires mounted to a vehicle.

It is another objective of the present invention to provide a method whereby an operator of a vehicle can query the conditions of the tires on his vehicle, when he is either driving the vehicle or is away from the vehicle.

It is yet another objective of the present invention to enable communication among the tires of the vehicle so that the overall operational characteristics of the tires of the vehicle can readily be conveyed to the operator by means of any one of the tires.

The invention relates to a system characterized by that which is specified in the appended independent claim directed to a system. The invention further relates to apparatus characterized by that which is specified in the appended independent claim directed to apparatus and to a method characterized by that which is specified in the appended independent claim directed to a method. The dependent claims described some preferred embodiments of the invention.

### Brief Description of the Figures

The above-mentioned objectives and advantages of the present invention will become apparent and the invention itself will best be understood by reference to the following description of embodiments of the invention taken in conjunction with the accompanying drawings, wherein:
- Fig. 1: is an illustration of the system to be integrated to each tire of a vehicle, and its remote connectivity to a mobile communicator;
- Figs 2a-2c: in combination form the flow diagram for illustrating the operation of the system of the instant invention as shown in Fig. 1;
- Fig. 3: is an illustration of another embodiment of the instant invention system where information is relayed to the user via his mobile communicator when the user is located out of the ordinary communications range of the tires of the vehicle;
- Fig. 4a: is a simplified illustration of the Fig. 1 invention;
- Fig. 4b: is a simplified illustration of an alternative embodiment which utilizes a converter for converting signals from one frequency or communications protocol into signals of another frequency or communications protocol for transmitting tire information to a mobile communicator;
- Fig. 4c: is yet another embodiment that illustrates the routing of information relating to the tires to the display of a radio inside the vehicle;
- Fig. 5: is an illustration of the Fig. 4b invention;
- Fig. 6: is a functional diagram illustrating the interaction between the tire module and the converter of the Fig. 5b invention and the various components in the tire module and the converter;
- Fig. 7: is a further illustration of the various components in the converter of Fig. 6;
- Fig. 8: is a flow diagram illustrating the operational processes of the converter invention of Fig. 7; and
- Fig. 9: is an illustration that shows the various interconnections among the various entities using the disclosed inventions.

### Detailed Description of the Present Invention

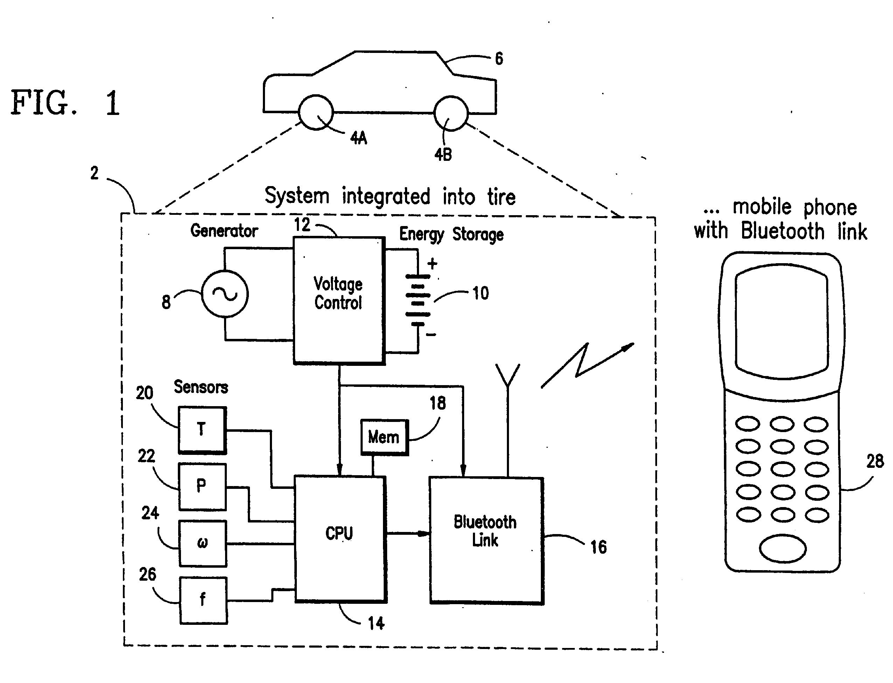

With reference to Fig. 1, the present invention includes a system 2 that is integrated to each of the plurality of tires 4a, 4b (and those tires not shown), mounted to a vehicle 6. System 2 could be integrated or incorporated to the interior wall of each of the tires 4 of vehicle 6 in a number of ways, among which are the methods in which integrated circuits are affixed to tires as disclosed for example in US-patents 5 483 827, 5 977 870 and 5 218 861. In addition, system 2 could be coupled or mounted to anywhere inside the tire, or to the rim to which the tire is mounted about.

For the instant invention, system 2 that is integrated to each of the tires of the vehicle, such as for example an automobile, a truck, semi, etc., includes a generator 8 that converts the vibrations, or movement, of the tires into electrical energy. Such generator may be a means for converting energy, i.e., an energy conversion mechanism. Generator 8, in practice, could be a linear actuator such as for example the linear actuators manufactured by the Moving Magnet Technologies Company of Besancon, France or a piezoelectric actuator such as the ACX Quick Pack actuator manufactured by the Active Control Experts Company of Cambridge, Massachusetts.

The electrical energy converted from generator 8 is fed to a conventional voltage control circuit 12, so that it may be provided to an energy store such as for example a rechargeable battery 10, a processor 14 and/or a telecommunications or transceiver module 16.

Communications module 16 is a transceiver, or transponder, that operates under a telecommunications protocol. Processor 14 could be any kind of conventional microprocessors made by, for example, companies such as Intel or AMD. For the embodiment shown in Fig. 1, an Atmel Atmeca-103 8 bit micro controller may also be used.

A memory store 18 is electrically connected to processor 14. Data generated by processor 14 may be stored in memory store 18. Conversely, information stored in memory store 18 could be retrieved by processor 14 for further processing.

Also electrically connected to processor 14 are a number of sensors 20, 22, 24 and 26. These sensors are conventional sensors that are used to measure the temperature, pressure, rotational speed and frequency, respectively, of the tire. These sensors could be obtained from the Senso Nor Company of Horten, Norway or the VTI Hamlin Oy of Vantaa, Finland.

Although shown with only four sensors, it should be appreciated that system 2 of the Fig. 1 embodiment could in fact have additional sensors such as for example sensors for measuring the acceleration and other parameters or characteristics of the tire. Other characteristics of the tire that may be measured include for example tire wear or tire friction. Moreover, in addition to the direct monitoring and measurement of the tire pressure, it is also possible to determine the pressure inside the tire from the information obtained from an accerometer. This may be done by correlating a certain pressure level to a certain frequency/amplitude of movement, or vibration, of the tire. Accordingly, sensors that measure the acceleration of the tire could also be integrated to the tire. Conversely, for the instant invention to operate, a minimum of at least one sensor, i.e., the pressure sensor, is all that is required.

But for blow-outs or serious cuts, most tire failures are usually preceded by a gradual loss of inflation pressure. Thus, the parameter, or characteristics, of a tire that should be monitored closely is its pressure. But due to the heat generated from the rotational movement and vibration of the tire, to get an accurate reading of the tire pressure, the measured tire pressure should be compensated by the temperature of the tire. Thus, both the air pressure and the temperature of the tire should be monitored by, for example, sensors 22 and 20, respectively, in order to obtain a temperature corrected reading of the tire pressure.

Although the different parameters of the tires are monitored continuously by the respective sensors, to preserve energy, measurements of the parameters are taken periodically. These predetermined periodic measurements are fed to processor 14, which does the actual calculation to compensate the pressure parameter with the temperature parameter, or any other measured parameters.

In those instances where the of interest measured parameter passes a predetermined threshold, for example the measured tire pressure falling below a given pressure such as for example 1.5 bar or 20 psi, a warning signal is immediately output from processor 14 to communications module 16 for transmission to the user. More on that later.

Although unlikely, there is always the possibility that the pressure of the tire would exceed a given high pressure and thereby increases the likelihood that there would be a blow-out. Thus, for the instant invention system, such over inflation likewise would trigger an immediate alarm if the pressure sensor 22 determines that the pressure in the tire approaches or passes an upper predetermined tire pressure limit.

Transceiver module 16 operates under a telecommunications protocol. Such protocol may be a conventional wireless data link protocol such as for example the Bluetooth communications protocol that allows relatively short distance (10 m to 100 m) data communications between communicative elements with a throughput up to 1Mbps. The link established by such Bluetooth protocol could be considered as a radio link that operates in the unlicenced 2.4GHz band. Further, under the Bluetooth protocol, such radio link employs a spread spectrum technique that allows the signal to frequency hop to thereby operate effectively even in noisy environments. Forward error correction (FEC) is also used in the Bluetooth protocol to improve the overall data transfer in the presence of noise. Module 16, operating under such Bluetooth protocol or other similar protocols, may be purchased from the Ericsson Company of Sweden or the Cambridge Silicon Radio Company of Cambridge, England. For the sake of simplicity, the external flash ROM memory that contains the Bluetooth software stack for operating communications module 16 is not shown in system 2.

Given that transceiver module 16 is capable of transceiving information within a given distance, mobile communicators or communication units such as for example pagers, personal digital assistance (PDA) devices, wireless terminals, and mobile phones all may be used for transceiving information with transceiver module 16. For the embodiment shown in Fig. 1, a mobile communicator such as for example a Nokia cellular browser capable phone that is WAP (wireless application protocol) compliant is used. Such mobile phone includes the Nokia models 6210, 6250, 9110i and 7110. Each of those Nokia phones may be used as a WAP browser that enables it to effectively communicate with communications module 16, which may act as a server when communicating with mobile phone 28. As noted above, even though a mobile phone is used for the embodiment of Fig. 1, other types of mobile communicators could likewise be used as the browser, so long as they are WAP adaptive. Of course, as technology advances, other types of wireless data link or speech combined with data link protocols or formats that are equivalents to, or replacements of, the WAP protocol are also envisioned and are adaptable for use for the instant invention.

Insofar as the Bluetooth communications protocol provides for two-way connection, mobile phone 28 in fact is communicatively connectable to any one of the tires 4 mounted to vehicle 6 at any time. Similarly, every tire mounted to vehicle 6 is in direct communication with every other tire so that the respective information from all of the tires of the vehicle are exchanged among the tires. The respective information from the various tires, when fed to a tire, is stored in memory store 18 of that tire. Accordingly, memory store 18 has stored therein information relating to all of the tires of the vehicle. Thus, any one of the tires mounted to the vehicle could in fact act as a server for collecting the operational parameters from the other tires, as well as itself, and transmit all of that information to the mobile communicator. Alternatively, each of the tires can transmit its own information individually to the mobile communicator, as each of the tires has its own communications module.

As phone 28 is mobile, the operator of the vehicle may in fact obtain information relating to the operational characteristics of the tires of the vehicle without being in the vehicle, by simply sending out a query to the tires for retrieving information being monitored thereat.

To conserve energy, when the vehicle is not moving and there is no request from the mobile communicator for information after a given time period, system 2 is put into a sleep or standby mode. But as was noted above, if a certain predetermined threshold is sensed at any of the tires of the vehicle, that tire would wake from its sleep mode and immediately transmit a warning message, which may include sound, vibrations, or other sensory attributes to the operator via mobile phone 28.

Since all of the tires of the vehicle communicate with each other, the respective positions of the tires, with respect to each other and the vehicle, are known. The tires together with the mobile communicator therefore in essence establish a mini telecommunications network or intranet that enables each tire to know exactly the status of the other tires, and to report the respective statuses of the tires to the operator via the mobile communicator carried by him.

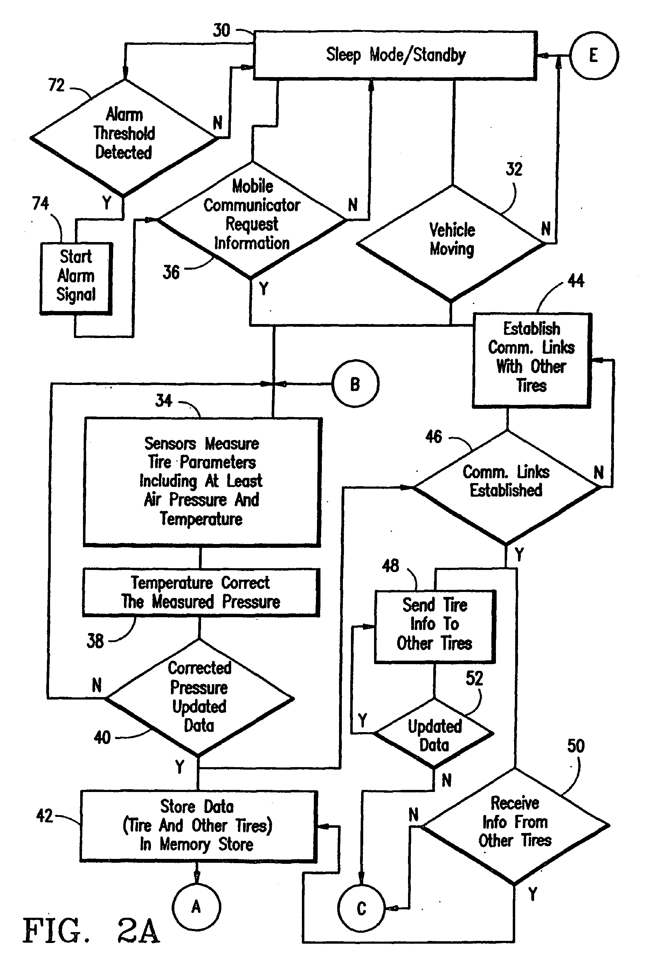

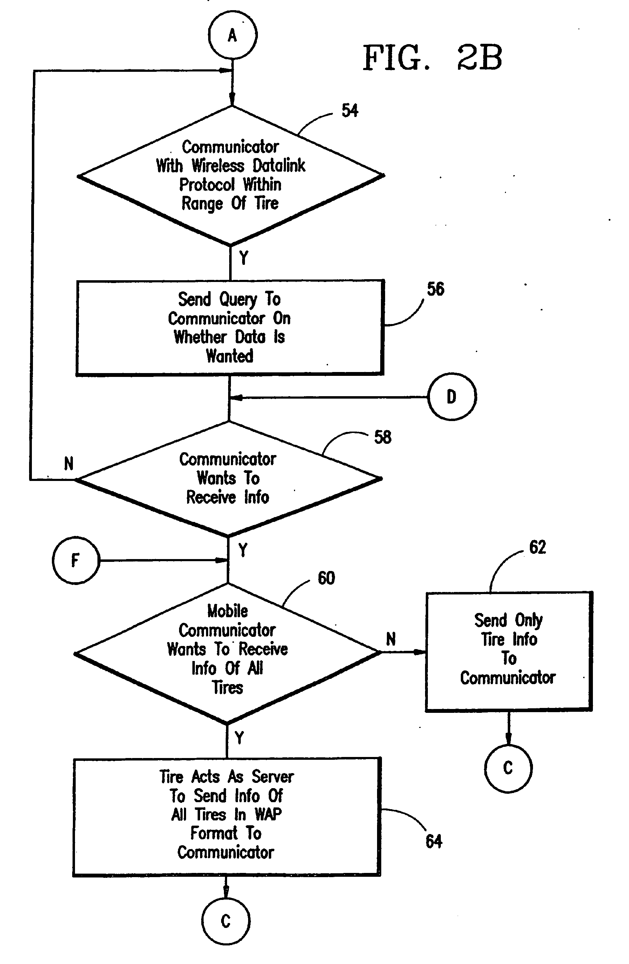

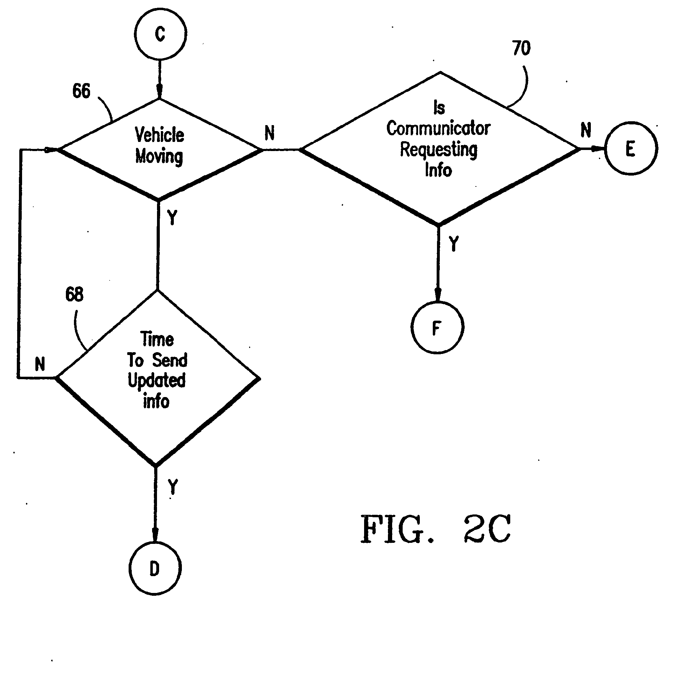

With reference to Fig. 2, the operation of the system of the instant invention, as it relates to one of the tires of the vehicle, is given. The operation of the system of the instant invention is effected by the various components, either singly or in combination, as shown in Fig. 1.

Beginning at process step 30, the system is in a sleep mode, or has been put on standby. To initiate the system, a determination is made, by processor 14 from input by an appropriate sensor, on whether vehicle 6 is moving, per process step 32. If the vehicle is stationary, and therefore the tires are not rotating, the process returns to step 30. Once it is determined that the vehicle is moving, the process proceeds to step 34 so that sensors 20-26 of the system would begin to measure the various tire parameters of the tire. As was noted above, the two tire parameters that should be measured are the tire pressure and the temperature.

Process step 34 also begins when there is a specific request from the mobile communicator, such as mobile phone 28, that information be transmitted thereto, per step 36. In any event, once the parameters are measured by the sensors, the process proceeds to step 38 in which the measured tire pressure is compensated by the measured temperature. If additional parameters are measured, some of those parameters may also be compensated by the other measured parameters. The process then determines whether the corrected tire pressure is an updated tire pressure, per step 40. If other tire parameters are also being measured and compensated, then those corrected tire parameters are likewise determined per step 40 on whether or not they are updated tire parameters.

If it is determined that the tire pressure has not been updated, the process returns to step 34, so that the tire parameter can continuously be monitored and measured. However, if it is determined that the measured parameter is an updated parameter, then the updated parameter is stored as new data in memory store 18 of the system, per step 42.

Further with respect to Fig. 2a, after the process has determined that the vehicle is in fact moving, per step 32, or that the mobile communicator has sent a query requesting information, per step 36, the tire initiates an attempt to establish communications links with the other tires, per step 44. A determination is then made, per step 46, on whether or not the communications links are established. If they are not, the process returns to step 44 and waits until the communications links with the other tires of the vehicle are established.

Thereafter, the information, if any, that is stored in the memory store of the system of the tire being discussed with reference to Fig. 2 is transmitted to the other tires of the vehicle, per step 48. At the same time, if there is data that is being transmitted from the other tires of vehicle 6 to the tire being discussed, as determined in step 50, then those data from the other tires are routed to memory store 18 of the being discussed tire for storage. If no data is being received from the other tires, the process proceeds to step 66 (Fig. 2c) to determine whether the vehicle is still moving.

Similarly, once the being discussed tire has sent whatever information it has in its memory store to the other tires, it proceeds to step 52 to determine whether the data in its memory store relating to its own characteristics has been updated. If it has, then that updated data is transmitted to the other tires. If not, the process proceeds to step 66.

With reference to Fig. 2b, once the measured and compensated parameters relating to the being discussed tire and the data received from the other tires of the vehicle are stored in the former's memory store, the process proceeds to step 54, so that the system can made a determination on whether the mobile communicator is within a certain distance from the tire. As mentioned above, given that the Bluetooth protocol, or other telecommunication protocols similar thereto, allows for communications between various communicative devices from 10 meters to 100 meters, once mobile phone 28 comes within the range of communications module 16, a signal is received thereby that a communicative device such as for example mobile phone 28 is in range.

Once communications module 16 senses that a mobile phone is nearby, it sends out a query to the mobile phone to ask whether the latter wants to receive the data stored in the memory of the system, per step 56. Upon seeing the request displayed on the mobile phone, the user may activate the appropriate button on the phone to provide a response to system 2. If the user does not want any data from the tire, then the process of system 2 returns to step 54 to once again make a determination on whether a mobile communicator is within its range.

However, if a positive response is received from the mobile phone that it indeed wants to receive information from the being discussed tire, then the process next determines, per step 60, on whether the mobile phone wants to receive the information relating to all of the tires of vehicle 6. If it does, per step 64, the tire would act as a server for all of the tires of vehicle 6. The data of the respective tires would then be sent by the being discussed tire, if any of those data is updated data and had not been sent earlier, under a WAP format, to mobile phone 28, per step 64. On the other hand, if the request from the mobile phone is that it does not want to receive the information of all tires from the being discussed tire per step 60, then the being discussed tire would act as a server for itself so that only the tire information relating to it is transmitted to mobile phone 28, per step 62.

The reason that mobile phone 28 would request the information from only the being discussed tire is because mobile phone 28 is provisioned with the capability of either retrieving information individually from all of the tires of the vehicle, or retrieving information from a single tire acting as a server for all of the tires of the vehicle. This alternative adaptability of mobile phone 28 is desirable and could be used, for example, in those instances where there may be a malfunction in the communications system of any one, or more, of the tires of the vehicle. For example, if system 2 of tire 4b of vehicle 6 were to malfunction and it has been acting as a server for all of the tires of vehicle 6 in communication with mobile phone 28, then the communications link between tire 4b and mobile phone 28 could either be disconnected, or inaccurate data be exchanged between tire 4b and mobile phone 28. At which time, recognizing that the received data may not be accurate, the user may switch to the mode whereby mobile phone 28 retrieves data from each of the tires of vehicle 6 individually. And with the separate retrieval of information, the user could easily determine, from the retrieved data from the respective tires, that there is a malfunction at tire 4b.

After information is transmitted to mobile phone 28, the process of the instant invention system proceeds to step 66 (Fig. 2c) to make a determination on whether the vehicle is still running. If it is, a further determination is made, per step 68, on whether it is time to send updated information to mobile phone 28. If it is, the process proceeds to step 58 to again inquire mobile phone 28 as to whether it wants to receive the updated information from the being discussed tire.

If it is determined in step 66 that the vehicle is no longer moving, the process proceeds to step 70 to make a determination on whether mobile phone 28 is requesting information from the tire. If it is, the process returns to step 60 to query the mobile phone on whether it wants the information from all of the tires or whether it only wants the information from the being discussed tire. If mobile phone is not requesting information as determined in step 70, the process returns to step 30, as the system goes into the sleep mode.

Thus, the respective communication systems of the instant invention for each of the tires in combination effect a telecommunications network in which the system integrated to each tire monitors and measures, at minimum, at least one parameter, but most likely at least the pressure and temperature of the tire, whenever the tire is rolling. The thus measured tire pressure data is temperature corrected by processor 14 of the system and stored in memory store 18. The tire could then send the data relating to itself to the other tires mounted to the vehicle. Accordingly, each tire of the vehicle in turn has stored in its own memory store 18 the respective temperature corrected pressures of all of the tires of the vehicle.

And whenever a mobile communicator such as for example a mobile phone or a PDA comes within range of any one of the tires or the vehicle, each of the tires would ask the mobile phone whether it wants to receive the pressure information relating to itself, or to the other tires of the vehicle. If the answer is yes, each of the tires of the vehicle will act as a server for sending either the information relating only to itself, or the respective data relating to all of the tires of the vehicle, to the mobile phone in the appropriate wireless data link protocol. Putting it differently, for the telecommunications network of the instant invention, any one of the tires of the vehicle may act as the server, while the mobile communicator acts as the browser.

Finally, to conserve energy, if the car is not running and if the mobile phone is not requesting information from the tires, the respective systems of the tires of the vehicle would go into a sleep mode until either the tires once again begin to roll, or whenever the pressure in any one of the tires of the vehicle drops below an alarm threshold, such as for example 1.5 bar or exceeds a high alarm threshold, such as for example 45 psi, a pressure well above the acceptable operating pressure of the tire.

This continuous monitoring of the alarm thresholds is represented by processing step 72. See Fig. 2A. So long as there is no detection of any alarm condition, the process continues to monitor for any alarm thresholds. But as soon as an alarm threshold is detected, the process proceeds to step 74 and an alarm signal is sent to the mobile communicator. Thereafter, the process proceeds to step 36 to determine if the user at that point would want to request that information be provided to the communicator as discussed above. If there is no request received, the process would continue to monitor the alarm thresholds and output the alarm signal to the mobile communicator as long as the alarm condition persists, or at least for a predetermined period of time.

In those instances where the mobile communicator, for example mobile phone 28, as carried by the user, is sufficiently far away from the vehicle that the respective communicative systems of tires 4 could not communicate therewith, another embodiment of the instant invention is envisioned.

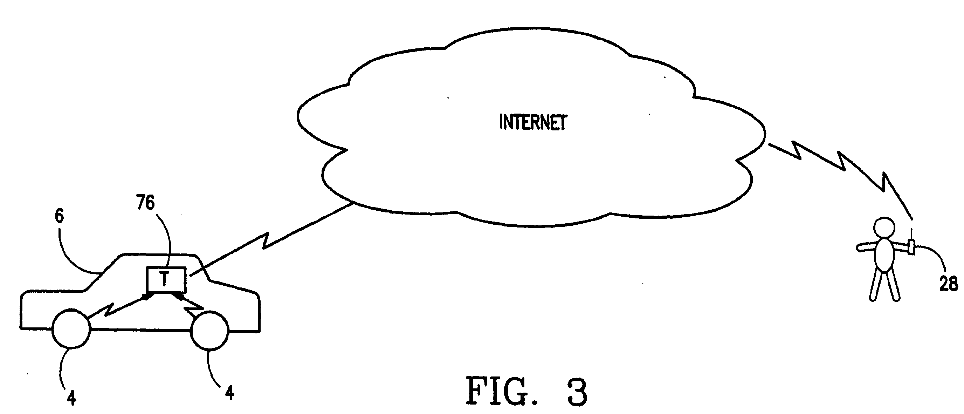

In particular, with reference to Fig. 3 which shows vehicle 6 being sufficiently far away from the user and his mobile communicator 28 so that the respective transceiver systems of tires 4 could not directly communicate therewith, to convey information regarding the operational characteristics of the tires to mobile communicator 28, a computerized communications system 76, mounted to vehicle 6, that has a long range wireless transceiver capable of telecommunicating with mobile communicator 28 via the internet, or other telecommunications or computer networks, is utilized. Using the same datalink protocol as discussed, supra, system 76 is also in direct communication with the transceiver systems of tires 4 of vehicle 6 so that it may transceive data therewith. To communicate with mobile communicator 28 by way of the internet, system 76 is adaptable to use the many available internet protocols and a wireless transceiver, such as for example a wireless modem. The long range signal transmitting aspect of system 76 is conventional and is disclosed, for example, in US-patents 5 825 286 and 5 473 938.

System 76 could be any communicator or communications system (with sufficient memory store) having transceiving capabilities that enables it to communicate with the transceiver systems of the tires and, at the same time, wirelessly connect to the internet. For example, system 76 may be a conventional laptop computer with wireless telecommunications capability, a web capable PDA or a web capable mobile phone that could be integrated to or retrofitted to vehicle 6. In fact, for those vehicles that have integrated or built in mobile communicators such as mobile phones, system 76 is not necessary as those "fixed' communicators could be configured to communicate with the transceivers of the respective tires, and transmit the operational parameters of the tires to the mobile communicator carried by the user via the internet, when the situation demands or when prompted by the user.

In operation, similar to the operational steps as outlined in Fig. 2, system 76 may periodically send data that it has collected from the various tires of vehicle 6 to mobile phone 28 by means of the internet, or may send information regarding the operational characteristics of the tires to the user when a request is received from mobile phone 28 for the operational characteristics of the tires. So, too, when any one of the tires of vehicle 6 senses that an alarm threshold has been reached or exceeded, an alarm signal is first sent to system 76, which in turn would immediately commence connection with mobile phone 28 via the internet, so as to inform the user of the potential problem by means of an alarm signal, per discussed above.

In essence, instead of sending the data directly from a tire to a mobile phone as was discussed above with respect to Figs. 1 and 2, the embodiment of Fig. 3 is capable of sending data first from any one of the tires, or all of the tires, to a computer system either mounted to, or resident in, the vehicle to which the tires are mounted. And the computer system mounted to the vehicle is equipped with the appropriate wireless modem or other transceiver means, so as to be able to log onto a telecommunications or computer network, such as for example the internet, and from there convey any information in regard to the tires to the user via the mobile communicator that the user is carrying. In the case where a mobile phone built into the vehicle is used, there is no need for any wireless modem or other transceiver means, as such mobile phones are web based communicators that are adaptable to connect directly to the internet. This alternative embodiment comes into play when the mobile communicator is out of the range of the transceiver systems of the respective tires of the vehicle.

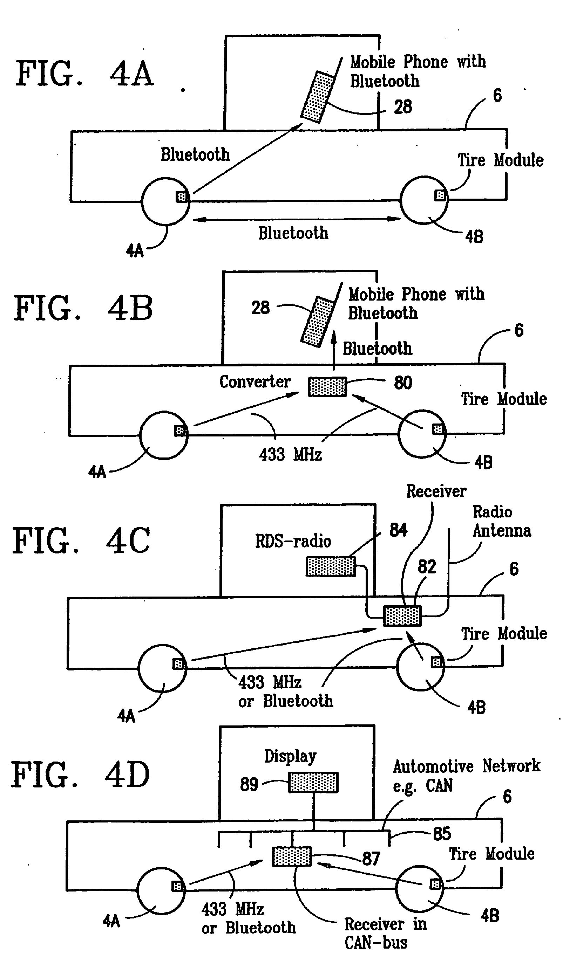

The essence of the invention as discussed so far is shown in Fig. 4a in which tires 4a and 4b are communicatively interconnected to each other, as well as individually to mobile communicator 28. The communication of data between the tires and mobile communicator 28 is by means of the Bluetooth protocol.

A variant of the Fig. 4a invention is shown in Fig. 4b in which different transceivers are located at tires 4a and 4b, as well as the other tires of vehicle 6, for transmitting information to a mobile communicator. Such transmission of information, given that the modules located at tires 4a and 4b operate at a given communications protocol while the communications protocol used by mobile communicator 28 may be different, a converter module 80 is used to convert the signals of one communications protocol into signals of another communications protocol so that communications between the tires and the mobile communicator could be had efficiently irrespective of the difference in the communications protocols.

Fig. 4c is yet another embodiment of the instant invention in which the signal from the tires are directly routed to a receiver 82, and from there the signal is modified and routed to an entertainment console 84 of vehicle 6. The entertainment console may include a radio that has a display, so that the data transmitted to receiver 82 is displayed as tire parameters such as for example the temperature and pressure of each of the tires. For this embodiment, if the signal sent from the tires is a radio frequency (RF) signal, then receiver 82, when it modifies the signal so as to make it adaptable to be used by radio 84, which is adapted to receive RF signals, will maintain the signal as a RF signal. In the instance where the signal from the tires are at the Bluetooth frequency, receiver 82 has to convert the Bluetooth frequency to an RF frequency or a communications protocol specific to radio 84, so that the signal provided to radio 84 could be readily displayed as appropriate tire parameters on the display of the in-dash display of the entertainment console.

The embodiment in Fig. 4d illustrates a communications network 85 integrated to vehicle 6. Network 85 is known as a Controller Area Network (CAN) that operates under a protocol established under ISO standard 11898 for serial data communication. Addition information regarding CAN could be gleaned from http://www.kvaser.se/can. As shown, network 85 has connected thereto a receiver 87 that receives from the tires 4 of vehicle 6 the respective tire characteristics of those tires. The transceiving of information between receiver 87 and the respective tiers 4 could be under either the communication protocol specific to the receiver such as for example 433 MHz of the Bluetooth frequency. By way of network 85, receiver 87 would convert the signals from the respective tires into data with the appropriate communication protocol specific to network 85 and adaptable to be used by a display 89, so that the tire characteristics of each of the tires of the vehicle could be shown on display 98.

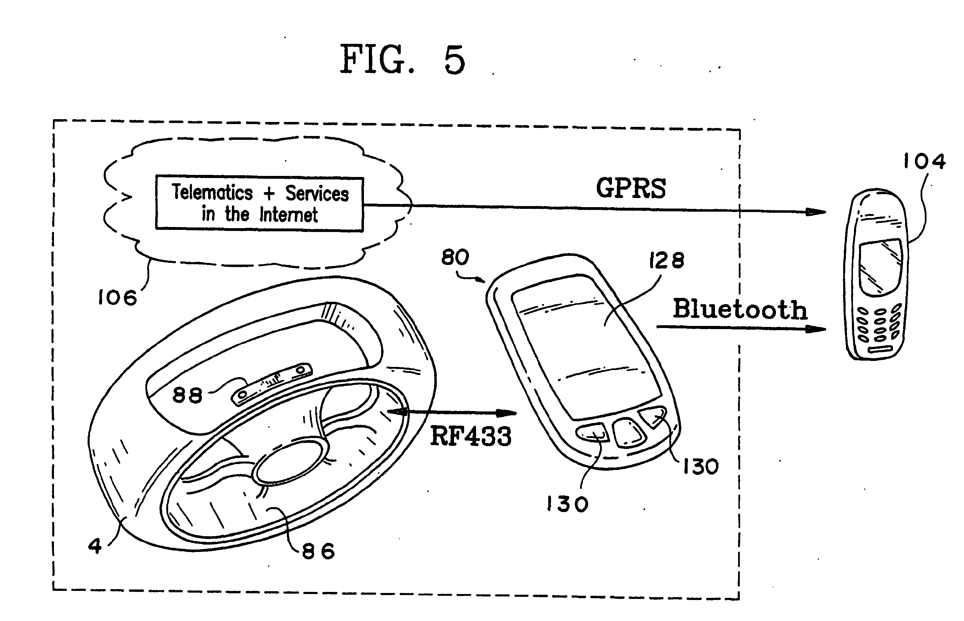

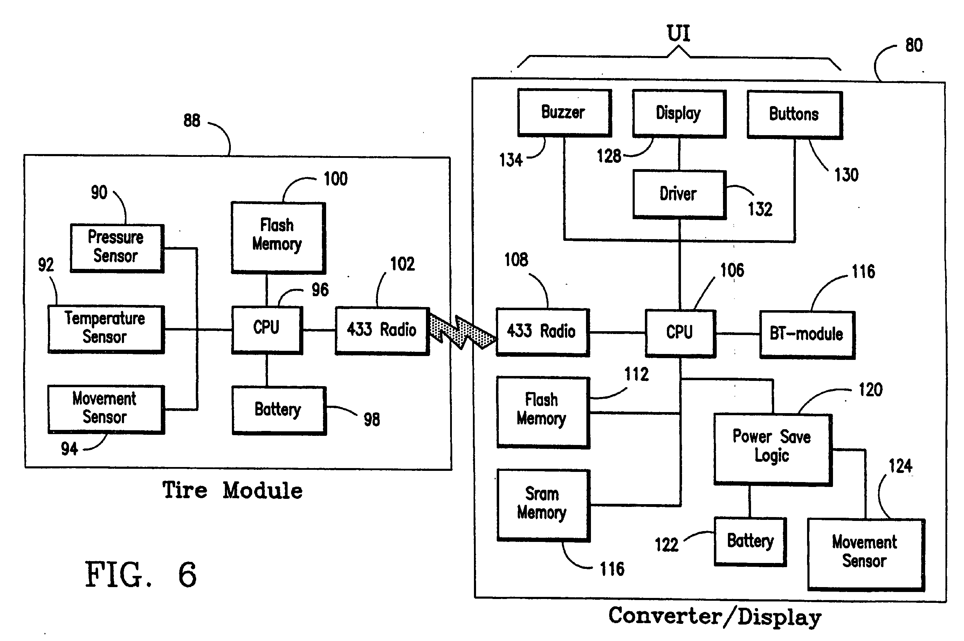

Fig. 5 illustrates the interaction among the various components of the embodiment of the invention shown in Fig. 4b. As shown, tire 4 is mounted about a rim 86 for this embodiment. A tire module 88, which is similar to system 2 shown in Fig. 1, is mounted to the rim inside tire 4. Although shown as being mounted to rim 86 so as to be inside tire 4, as was mentioned early on in this application, module 88 may also be mounted or integrated to the inside surface of tire 4. For the embodiment of Fig. 5, module 88 is represented by the tire module shown in Fig. 6.

As best shown in Fig. 6, module 88 has a number of sensors such as for example pressure sensor 90, temperature sensor 92 and movement sensor 94. As is evident by their respective names, pressure sensor 90 measures the pressure of the tire, temperature sensor 92 measures the temperature of the tire, and movement sensor 94 measures the rotational movement of the tire. As should be readily apparent, not all three sensors need to be present in each tire, as there may be in actuality only one sensor in a particular tire. On the other hand, there could be well be more sensors than the three shown in Fig. 6 for tire module 88, as additional characteristics of the tire may need to be monitored.

Same as system 2 of the Fig. 1 embodiment, the outputs of these sensors are provided to a CPU 96. The power for the system is provided by a battery 98 and the operating instructions for CPU 96 are stored in a flash memory 100. In contrast to the Fig. 1 embodiment, instead of a Bluetooth link, tire module 88 is equipped with a radio module 102 which is a transceiver module configured to transceive at a given frequency, such as for example an exemplar radio frequency of 433 MHz. Radio transceiver 102 is a commercially available transceiver that may be obtained from the RF Micro Devices Company, having part No. RF2905. Thus, for tire module 88, an operational characteristic of the tire, such as for example its pressure, upon being sensed by pressure sensor 90, is fed to CPU 96, and then modulated by radio module 102 as a radio frequency (RF) signal, at for example 433 MHz, for transmission. The operational frequency or communications protocol for transceiver 102 may be selected to be any non-standard frequency.

The RF transmission, designated RF 433 in Fig. 5, is sent to a converter device, designated 80 in Figs. 5 and 6. For the embodiment shown in Fig. 5, converter 80 is configured in the shape of a personal digital assistant (PDA), and therefore is meant to be a portable device that could be moved from one vehicle to another, and utilized in the different vehicles, so long as the tires of those vehicles are equipped with tire module 88 that is communicable with converter 80.

The purpose of converter 80 is to convert the input RF signal from tire 4, more accurately from tire module 88 in the tire, to an output signal that has a communications protocol which is the same as that used by the mobile communicator that is to receive the tire information. Such mobile communicator includes for example a WAP (Wireless Application Protocol) telecommunications device 104, which could be a WAP mobile phone made by the Nokia Corporation.

As further shown in Fig. 5 and disclosed previously, the operational characteristics of tire 4 measured by tire module 88 may instead be routed to a telecommunications network 106 such as the internet network so that the data may be transmitted as GPRS (General Packet Radio Service) data to mobile phone 104. The way in which the data information could be transmitted as packets from internet 106 to mobile phone 104 may be gleaned from the website http://www.nokia.com/gprs/.

With reference to Fig. 6, converter 80 is shown to comprise a number of interconnected components. More particularly, a first transceiver module in the form of a RF433 radio module 108 is provided at converter 80 to receive the RF signal from module 102 of tire module 88. It is at radio transceiver module 108 that the signal modulated by radio transceiver module 102 of tire module 88 is demodulated. The RF signal from radio transceiver module 102 contains tire parameters such as the pressure and temperature of the tire to which tire module 88 is mounted. The signal is a RF signal that, for the exemplar embodiment, has a frequency of 433 MHz. It is at radio transceiver module 108 that the analog signal from tire module 88 is demodulated and converted to data bits that are representative of the measured operational characteristics of the tire.

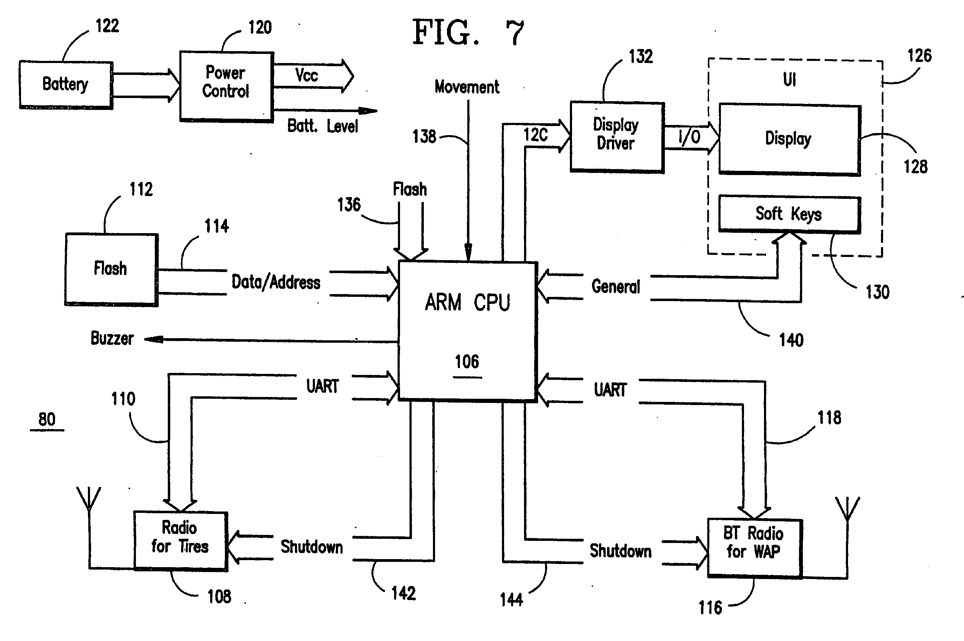

As best shown in Fig. 7, which is a schematic that details the flow of data among the various components of converter 80, the data bits from radio transceiver module 108 are fed, by means of a UART (Universal Asynchronous Receiver/Transmitter) bus 110 to CPU 16, which may be an ARM (Advanced Risc Machine) processor. CPU 106 is a processor that could be manufactured by a number of companies, including for example the ARM Technologies Company, the Atmel Company and the ST Microelectronics Company.

The data bits from radio transceiver module 108 are used by CPU 106 to calculate numbers, parameters or quantities that represent the measured or monitored operational characteristics of the tires by tire module 88. This is done by using conventional formulas or principles of physics to correlate the measured temperature and pressure, which are dependent on each other, so long as the volume of the air inside the tire is assumed to remain constant. To effect this calculation, the appropriate formulas may be provided to CPU 106 by a flash memory 112, which also has stored therein the codes or software needed by CPU 106 to function normally.

Further stored in flash memory 112 are user configurable parameters for presetting the alarm limits for converter 80 which will be further described, infra. The stored data from flash memory 112 is provided to CPU 106 via data address bus 114, as shown in Fig. 7. Although not shown in Fig. 7, the working memory for converter 80 is provided by a SRAM memory 116 (Static Random Access Memory). See Fig. 6. The SRAM memory is used by CPU 106 to store the data that is needed in the course of its operation. As is well known, the data stored in SRAM memory 116 is erased when the power for converter 80 is turned off.

With the software and formulas provided by flash memory 112, CPU 106 could calculate from the data received by radio transceiver module 108 the quantities or parameters that represent the measured operational characteristics of the tire. The calculated quantities are then routed to a Bluetooth (BT) transceiver module 116. It is at BT module 116 that the digital signal in the form of the calculated data bits from CPU 106 is converted into a signal having the communications protocol of the module, in this instance a BT communications protocol that operates at 2.45 GHz. Although disclosed herein as being an output signal at 2.45 GHz, it should be appreciated that transceiver module 116 could in reality operate under a communications protocol having a frequency that is different from the frequency of the Bluetooth protocol. As best shown in Fig. 7, the data exchanged between CPU 106 and BT transceiver module 116 is via UART bus 118.

Also provided in converter 80 are a number of additional components. These include a Power Safe Logic module 120, a power source in the form of a Battery 122, and a Movement Sensor 124. Power safe logic module 120 regulates the power provided to the various components of converter 80. Movement of the converter is detected by way of movement sensor 124.

Converter 80 may further have a User Interface (UI) 126 that includes a display 128 and a number of Soft Keys 130. These soft keys 130 are buttons on converter 80 that a user presses to set a number of parameters such as for example the respective positions of the tires on the vehicle, or the pressure and temperature warning limits for the tires. Instructional symbols provided on display 128 of the converter 80 guide the user with the pushing of the appropriate buttons.

The symbols and graphical displays shown on display 128 are driven by a display driver 132, also a component of converter 80. Lastly, an alarm in the form of a buzzer 134 is provided in converter 80 to output an alarm to the user when a preset alarm is triggered by a measured operational characteristics of the tire, or when the measured operational characteristic of the tire has reached, exceeded, or fell below respective preset alarm limits, if more than one alarm limit is desired.

With further reference to Fig. 7, the interconnections among the various components of converter 80 are shown. In addition to those already discussed with respect to Fig. 6, Fig. 7 shows more clearly that Power Control 120 regulates the operating voltage Vcc, which is the power source for all of the components in converter 80. In addition, a signal is output from power control 120 to indicate the level of voltage left at battery 122, thereby apprizing the user the available battery life for the converter.

There are a number of interconnections to CPU 106. One of the interconnections not previously discussed is bus 136, which is a JTAG (Joint Test Action Group) connector interface by which the software for running CPU 106 may be reconfigured. The JTAG interface is a conventional standard that may also be used for testing purposes during the production of converter 80. Additional information relating to JTAG interfaces may be obtained from the website http://www.jtag.com/.

Lead 138 provides an input to CPU 106 to inform the processor that movement has been detected for the converter. This is the case where movement sensor 124 (Fig. 6) detects movement for converter 80, due to the movement of the vehicle or the user moving converter 80. By turning converter 80 on only when movement is detected conserves the battery for converter 80, as converter 80 is activated only when necessary.

Bus 140 that interconnects soft keys 130 with CPU 106 is a general bus that interconnects the four keys 130 (Fig. 5) of the converter with CPU 106, so that, as each key is pushed, the input line relating to that key is either connected to ground or Vdc, which for the embodiment of Fig. 7 is 3 Vdc.

In addition to the respective UART bus connections 110 and 118 between CPU 106 and radio transceiver module 108 and BT transceiver module 116, CPU 106 further is connected to modules 108 and 116 by corresponding Shutdown buses 142 and 144. The instructions output from CPU 106 via the shutdown buses 142 and 144 to the respective transceiver modules 108 and 116 are meant to control the power consumption of those modules, so that those transceiver modules will operate only when needed, and even then only for the minimum amount of time necessary.

In particular, for radio transceiver module 108, the shutdown signal from bus 142 operates in periods of 30 seconds. In this 30 s period, there are a plurality of 1 second time windows for each of the tires that is being monitored. In other words, CPU 106 loops through 30 seconds, as it allocates 1 second time windows for each of the tires. The allocation is done when the tires first contact converter 80. It does not necessarily means that converter 80 is listening in to the tire sensors during the entire time window. Rather, CPU 106 only needs to listen for a short while from the beginning of the time window in order to find out if the tire sensor(s) in the tire module 88 has information that tire module 88 wants to broadcast to the converter. Thus, shutdown for radio transceiver module 108 works in 30 seconds with 1 second time windows for each of the tires that is being monitored.

The shutdown for BT transceiver module 116 is more complex than that for radio transceiver module 108. This is due to the fact that a Bluetooth device is specified to respond in 2.56 seconds. Thus, the time period for BT transceiver module 116 has to be divided into periods of 2.56 seconds. And this period is controlled by BT transceiver module 116 itself, so that the time window for BT transceiver module 116 really is of no concern to CPU 106. CPU 106, however, may request for a shutdown of BT transceiver module 116. This is possible only if no other Bluetooth devices are in the vicinity of BT transceiver module 116 for a predetermined time, which is user configurable. The reason that CPU 106 could shut down BT transceiver module 116 only when no other Bluetooth devices are within range of BT transceiver module 116 is that BT transceiver module 116 can communicate with all Bluetooth enabled devices.

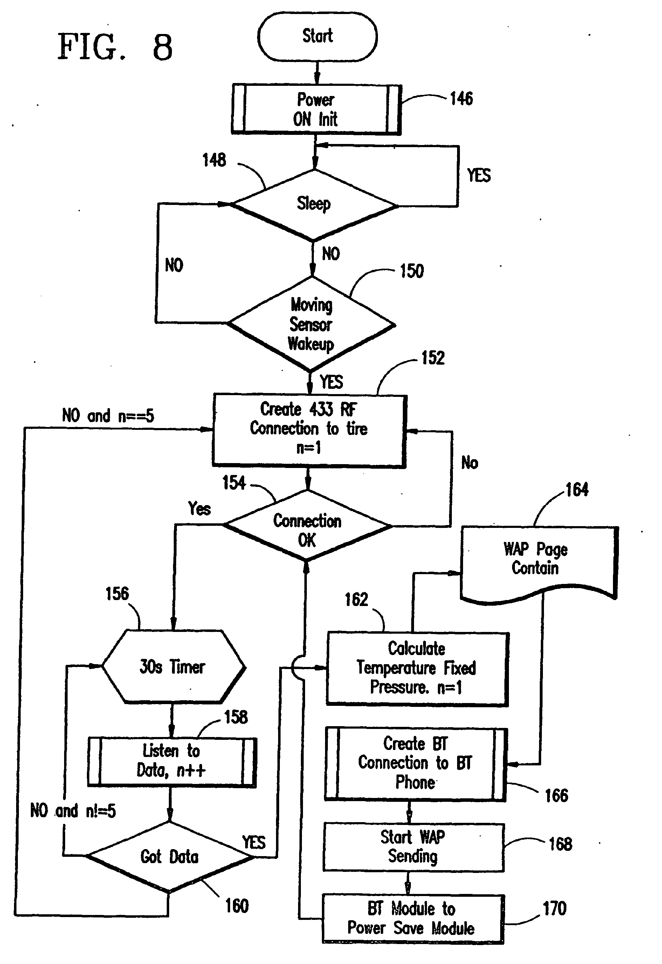

Fig. 8 is a flow diagram illustrating the steps of the conversion process undertaken by converter 80 in converting the RF signal received from tire transceiver module 88 into a BT signal to be broadcast to BT enabled devices by BT transceiver module 116.

This conversion of signals having one communications protocol into signals of another communications protocol begins with the turning on of the power for converter 80 per step 146. A determination is made in step 148 on whether the converter should stay in its sleep mode. As long as the converter remains stationary, it is assumed that the vehicle has not moved. This is due to the fact that even though converter 80 is portable, it nonetheless needs to be placed somewhere inside the vehicle. Also, it is envisioned by the inventors that converter 80 could indeed be a component that is built into the vehicle. In any case, so long as movement sensor 124 in converter 80 has not registered any movement, the converter will remain in its sleep state.

If there is movement as determined per step 150, a telecommunication connection is made between converter 80 and tire module 88. A loop variable "n" identifies whether there is any traffic between the tire and the converter for a given time period, such as for example for every 2.5 minutes for each of the tires of the vehicle. This process is performed in step 152.

A determination is next made in step 154 to find out whether the connection between converter 80 and tire module 88 has been made. If not, radio transceiver 108 will attempt to connect with its counterpart in tire module 88. If indeed a connection has been made, then a time period such as for example 30 seconds is established per step 156. During this preset time period, converter 80, and more specifically radio transceiver module 108, listens to any data being transmitted from tire module 88, per step 158. Whether or not data is received is determined per process step 160. Since the loop variable for the exemplar embodiment converter listening time has been preset at 2.5 minutes and the time period for listening has been preset to 30 seconds, process step 160 would determine for a period of five 30 second cycles, i.e., 2.5 minutes, on whether any data is received from tire module 88. If there has not been any data received even at the fifth try, then it is assumed that no connection has been made and that radio transceiver 108 has to further attempt to make a connection with its counterpart transceiver 102 in tire module 88.

If process step 160 determines that data indeed was retrieved from tire module 88, then the process proceeds to step 162 whereby CPU 106, with the appropriate input parameters and formulas from memory 112, calculates the desired operational characteristics of the tire based on the input data. Such operational characteristics of the tire may include for example the temperature and pressure of the tire. At this time, since CPU 106 is a digital processor, the information retrieved from tire module 88 has been converted by radio transceiver 108 into corresponding data bits. These data bits, as was discussed previously, are fed by radio transceiver module 108 to CPU 106 via UART bus 110.

Once the desired tire parameters or quantities are calculated by CPU 106 per step 162, that information is routed to the appropriate memory addresses from which the WAP communications device, in this embodiment a WAP cell phone 108, could read the information. The memory addresses are represented by the WAP Page Contain in step 164.

With the appropriate memory addresses having been established in step 164, the quantities represented by the memory addresses are forwarded to BT transceiver module 116. There, per step 166, the calculated quantities are converted to a BT signal in BT transceiver module 116. With further information provided from CPU 106, a connection using the BT protocol is made for broadcasting the BT signal, which contains the calculated tire parameters, or operational characteristics, to a communications device that is configured to receive the signal.

When there is a connection, per step 168, the tire parameters are transmitted to the communications device, such as for example mobile phone 104. Thereafter, BT transceiver module 116 powers down to a power safe mode, per step 170, and the process returns to step 154 to determine if there is a connection between converter 80 and tire module 88. After a certain time period, if there is no movement detected, converter 80 is powered down to its sleep mode.

Even though the discussion of the converter embodiment up to now focuses on the relationship between the converter and a particular tire, it should be appreciated that the converter is in actuality communicating with the various tires of the vehicle at respective time periods.

Given that the various components of the vehicle could indeed form a network, such as for example a Controller Area Network (CAN) as shown in Fig. 4d, it should be appreciated that the different tires and the converter, as well as other components of the vehicle, are in fact parts of the CAN.

In fact, the embodiment shown in Fig. 4c could be considered as a part of the CAN of the vehicle. There, the data from the tire is first received by receiver 82, which modifies the signal so that it could be forwarded as a Radio Data System (RDS) signal to a radio antenna integrated to the vehicle, to thereby enable the driver to view the tire parameters on the display 84 of the radio, or the entertainment console. If desired, an audio device such as a conventional voice synthesizer may be added to the vehicle so that the tire information may be verbally announced to the driver, who then no longer needs to take his eyes off the road.

For the exemplar embodiments shown in Figs. 4c and 4d wherein the tire information is forwarded to a display resident in the vehicle, the communications protocol at the respective receivers 82, 87 may be vehicle specific, so that the tire data could be readily received by the display or voice synthesizer resident in the vehicle.

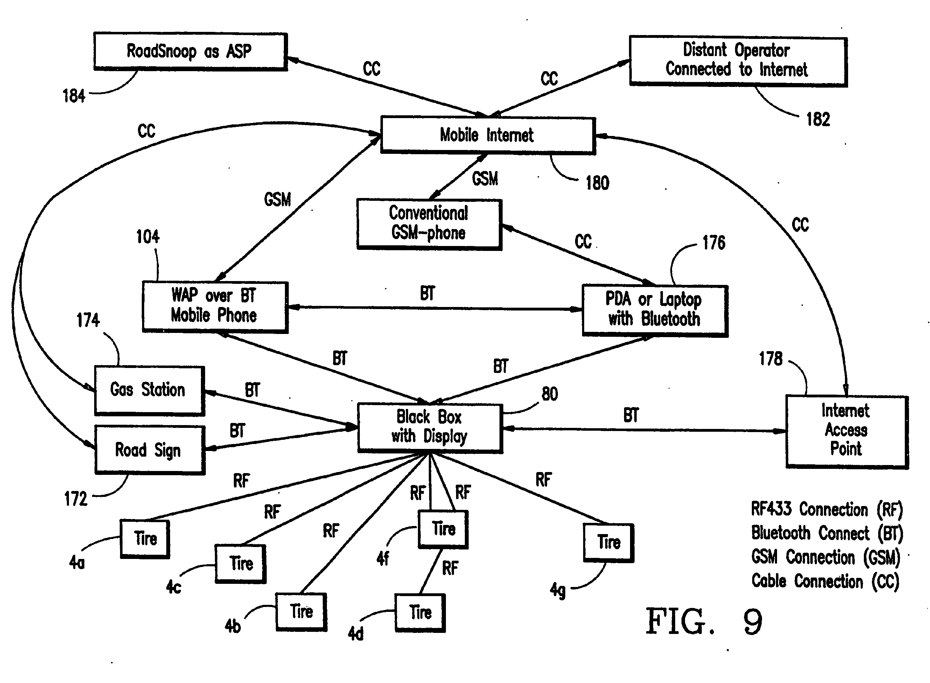

Fig. 9 provides an overall view of how the converter, in this instance designated as a black box with display, could broadcast the information it has received from the various tires of a vehicle, or the tires of various vehicles, to different communication devices. In particular, for the Fig. 9 embodiment, the converter 80 is in communication with each of the exemplar tires 4a-4g by means of their respective RF signals. Upon receipt of the respective signals from the various tires, system 80 converts each signal to a corresponding output BT signal, which it then outputs to the various communication devices, which are either fixed or portable. For example, tire information may be transmitted to a road sign 172 or a gas station 174.

Alternatively, converter system 80 could broadcast the tire information to a WAP mobile phone 104, or to other PDAs or laptops 176. Furthermore, as was discussed with respect to the invention disclosed in Figs. 1-3, the BT signal from converter system 80 may be output to an internet access point 178. There, the tire information is routed to the internet server, represented by mobile internet network 180. With the information now available at internet 180, a user with a conventional mobile phone may retrieve the tire information using a conventional phone having a communications protocol such as the GSM protocol. Similarly, a user with a WAP mobile phone who is not within range of converter system 80 and therefore could not receive the tire parameters by way of the BT protocol could nonetheless connect to the internet using the phone's built-in GSM protocol to retrieve the tire information. The same could be said with respect to gas station 174 and road sign 172, each of which could likewise receive the tire information from, or forward the tire information it received from converter system 80 to, the internet environment 180.

With the tire information in internet 180, any distant operator 182 could likewise connect to internet 180 to retrieve the tire information. Such distant operator may in fact be companies that are interested in the conditions of tires mounted to different types of vehicles, for example.

The instant invention also provides tire manufacturers, such as for example the assignee of the instant application, the ability to retrieve from internet 180 tire information relating to a plethora of tires that it manufactures, or is interested in. Such manufacturer is represented by Road Snoop 184, which is a wholly owned subsidiary of the assignee of the instant application, acting as a ASP (Application Service Provider) to produce contents in the internet. In this instance, not only could information relating to tires be retrieved, but also produced by the ASP and sent to the internet, so that the produced information may be retrieved by the users of mobile phones, PADs, laptops, or other telecommunication devices.

## Claims

1. In a vehicle (6) having at least one tire (4), a system comprising sensor means (20, 22, 24, 26, 90, 92, 94) in working relation with said tire for monitoring the operational characteristics of said tire, tire transceiver means (16, 102) working cooperatively with said sensor means for outputting a first signal having a first frequency representative of the operational characteristics of said tire, and independent means (80, 82, 87) operating separately from said sensor means for receiving said first signal, converting said first signal into a second signal having a frequency adaptable to be used by a plurality of communications devices (28, 84, 104, 176), and outputting the converted second signal to at least one communications device, **characterised in that** said communications devices operate under a communications protocol; and said protocol adaptable to be used by said communications devices comprises Bluetooth (BT) or Wireless Application Protocol (WAP).

2. The system of claim 1, wherein said vehicle comprises a Controller Area Network (CAN) (85); and
wherein said independent means (87) and transceiver means are parts of said CAN.

3. The system of claim 1, wherein said vehicle further comprises:
receiver means operable under a communications protocol adaptable to receive said second signal from said independent means (80, 82, 87); and
a display (89) for displaying the operational characteristics of the tire representative of said second signal.

4. The system of claim 1, wherein said vehicle comprises an entertainment console (84) having a display, further comprising:
means for receiving and modifying said first signal so that the operational characteristics of the tire represented by said first signal can be displayed on said display.

5. The system of claim 1, wherein said independent means (80, 82, 87) comprises a first transceiver module (108) for receiving said first signal from said tire, a processor (106) for calculating the operational characteristics of said tire from said first signal, and a second transceiver module (116) for outputting the calculated operational characteristics of said tire as said second signal.

6. The system of claim 5, wherein at least one of said communications devices (28, 84, 104, 176) comprises a Wireless Application Protocol (WAP) telecommunications device; and
wherein said second transceiver module outputs (116) the calculated operational characteristics of said tire as a Bluetooth signal to said WAP telecommunications device.

7. The system of claim 1, wherein said independent means (80, 82, 87) comprises a display (128) for displaying pre-formatted information including the pressure and temperature of each tire of said vehicle.

8. The system of claim 1, wherein said independent means (80, 82, 87) comprises key means (130) actuatable by a user to set the respective positions of each of the tires on said vehicle and at least one preset limit for activating a warning alarm when triggered by at least one of the operational characteristics of said each of the tires.

9. The system according to any previous claim, wherein said sensor means (20, 22, 24, 26, 90, 92, 94) is adaptable to be integrated to said tire, provided inside said tire, or coupled to the rim to which said tire is mounted about.

10. The system of claim 1, comprising
tire transceiver means (16, 102) working cooperatively with said sensor means for outputting a first signal having a first frequency representative of the operational characteristics of said tire; and
converter means (80) for receiving said first signal, converting said first signal into a second signal having a second frequency, and outputting said second signal to a remote communications device adapted to receive signals of said second frequency.

11. The system of claim 10, wherein said first frequency is 433 MHz and said second frequency is 2.45 GHz.

12. The system of claim 10, wherein said converter means (80) comprises a first transceiver module (108) for receiving said first signal from said tire, a second transceiver module (116) for outputting said second signal as a Bluetooth (BT) signal to a Wireless Application Protocol (WAP) based telecommunications means, and a processor (106) for calculating the tire characteristics from said first signal.

13. The system of claim 10, wherein said vehicle further comprises:
receiver means for receiving said second signal from said converter means (80) or said first signal from said transceiver means (16, 102); and
a display (89, 128) for displaying the operational characteristics of said tire represented by either said first signal or said second signal.

14. The system of claim 1, comprising
tire transceiver means (16, 102) working cooperatively with said sensor means (20, 22, 24, 26, 90, 92, 94) for outputting one signal representative of the operational effectiveness of said tire, said signal having a first communications protocol; and
converter means (80) for receiving said one signal and converting said one signal into an other signal having a second communications protocol, said converter means outputting said other signal to a telecommunications device adapted to receive signals having said second communications protocol.

15. The system of claim 14, wherein said first communications protocol comprises a first frequency and said second communications protocol comprises Bluetooth (BT) frequency.

16. The system of claim 14, wherein said first frequency is 433 MHz and said second frequency is 2.45 GHz.

17. The system of claim 14, wherein said converter means (80) comprises:
a first transceiver module (108) for receiving said one signal;
processor means (106) for calculating the operational characteristics of said tire from data carried by said one signal; and
a second transceiver module (116) for outputting the calculated operational characteristics of said tire as said other signal.

18. An apparatus for converting a signal of one frequency to an other signal of a different frequency in the system according to preamble of claim 1, said apparatus comprising:
first transceiver means (108) for receiving one signal having one frequency representative of the operational characteristics of at least one tire, and for converting said one signal into corresponding data bits;
processor means (106) for calculating quantities relating to the operational characteristics of said tire using said data bits; and
second transceiver means (116) for receiving said quantities from said processor means, and converting said quantities into an other signal having an other frequency corresponding to the operational characteristics of said tire, said second transceiver means outputting said other signal to at least one communications means (28, 84, 104, 176) adaptable to receive said other signal, **characterised in that** said communications means operate under a communications protocol; and said protocol adaptable to be used by said communications means comprises Bluetooth (BT) or Wireless Application Protocol (WAP).

19. Apparatus of claim 18, wherein said second transceiver means (116) outputs said other signal to said communications means (28, 84, 104, 176) only upon a request from said communications means.

20. Apparatus of claim 18, wherein said other signal comprises a Bluetooth (BT) signal.

21. Apparatus of claim 18, further comprising:
memory means (112) for storing the operating system for running said processor means and user configurable parameters for processes performed by said processor means to calculate said quantities from said data bits.

22. Apparatus of claim 18, further comprising:
a display (128) for displaying the operational characteristics of the tires; and
key means (130) for setting at least one alarm limit for outputting an alarm signal when said alarm limit is triggered by at least one of the operational characteristics of said tire.

23. Apparatus of claim 18, further comprising:
power control means (120) for minimizing the amount of power used by shutting down said first and second transceiver means after respective predetermined periods of time.

24. In a vehicle (6) having at least one tire (4), a method comprising the step of:
a) monitoring the operational characteristics of said tire (34); b) outputting the monitored operational characteristics of said tire as a first signal having a first communications protocol (62, 64);
c) converting said first signal into corresponding data bits (156, 160);
d) calculating quantities relating to the operational characteristics of said tire using said data bits (162);
e) converting the calculated quantities into a second signal having a second communications protocol; and
f) outputting said second signal to at least one communications device adaptable to receive signals having said second communications protocol (166, 168, 170),
**characterised in that** said first communications protocol comprises a first frequency and said second communications protocol comprises Bluetooth (BT) frequency.

25. The method of claim 24, wherein said first communications protocol comprises a 433 MHz frequency and said second communications protocol comprises a Bluetooth (BT) frequency.

26. The method of claim 24, further comprising the step of:
displaying the operational characteristics of said tire represented by said second signal on a display.

27. The method of claim 24, further comprising the step of:
selectively shutting down said steps c, d, e and f after at least one predetermined time period.

28. The method of claim 24, wherein converting one signal of one communications protocol to an other signal of an other communications protocol comprises the steps of:
receiving said one signal of said one communications protocol from said tire, said one signal containing information relating to the operational characteristics of said tire;
converting said one signal into corresponding data bits;
using said data bits to calculate quantities representing the operational characteristics of said tire; and
converting the calculated quantities into said other signal of said other communications protocol, said other signal containing information relating to the operational characteristics of said tire.

29. The method of claim 28, further comprising the step of:
outputting said other signal to at least one communications device adaptable to receive signals of said second communications protocol.

30. The system of claim 1, wherein said vehicle (6) comprises said sensor means (20, 22, 24, 26, 90, 92, 94) mounted to said tire (4), an entertainment console (84) in said vehicle having a receiver with a display, means for receiving a first frequency signal and modifying said first frequency signal into a second signal with a frequency usable for displaying the operational characteristics of said tire on the display of said console.

31. The system of claim 30, wherein said entertainment console (84) comprises a radio having a display; and
wherein the operational characteristics of the tire are displayed on the display of said radio.

32. The system of claim 30, further comprising:
converter means (80, 82, 87) for receiving said first frequency signal, converting said first frequency signal into a second signal having a second frequency, and outputting said second signal to a remote telecommunications device (28, 104) adapted to receive signals of said second frequency.

33. The system of claim 32, wherein said converter means (80, 82, 87) is portable and can be used from one vehicle to another vehicle.

## Patentansprüche

1. In einem Fahrzeug (6) mit mindestens einem Reifen (4) ein System, umfassend ein Sensormittel (20, 22, 24, 26, 90, 92, 94) in einer Arbeitsbeziehung mit dem Reifen, um die Betriebseigenschaften des Reifens zu überwachen, ein Reifentransceivermittel (16, 102), das zusammenwirkend mit dem Sensormittel arbeitet, um ein erstes Signal mit einer ersten Frequenz, das die Betriebseigenschaften des Reifens darstellt, auszugeben, und ein unabhängiges Mittel (80, 82, 87), das getrennt von dem Sensormittel arbeitet, um das erste Signal zu empfangen, das erste Signal in ein zweites Signal mit einer Frequenz umzuwandeln, das geeignet ist, um von einer Vielzahl von Kommunikationseinrichtungen (28, 84, 104, 176) verwendet zu werden, und das umgewandelte zweite Signal an mindestens eine Kommunikationseinrichtung auszugeben,
**dadurch gekennzeichnet, dass** die Kommunikationseinrichtungen gemäß einem Kommunikationsprotokoll arbeiten; und das Protokoll, das geeignet ist, um von den Kommunikationseinrichtungen verwendet zu werden, das Bluetooth (BT) oder Wireless Application Protocol (WAP) umfasst.

2. System nach Anspruch 1, wobei das Fahrzeug ein Controller-Area-Network (CAN) (85) umfasst; und
wobei das unabhängige Mittel (87) und das Transceivermittel Teile des CAN sind.

3. System nach Anspruch 1, wobei das Fahrzeug darüber hinaus umfasst:
ein Empfängermittel, das gemäß einem Kommunikationsprotokoll arbeiten kann, das geeignet ist, um das zweite Signal von dem unabhängigen Mittel (80, 82, 87) zu empfangen; und
eine Anzeige (89), um die Betriebseigenschaften des Reifens, die das zweite Signal darstellen, anzuzeigen.

4. System nach Anspruch 1, wobei das Fahrzeug eine Unterhaltungskonsole (84) mit einer Anzeige umfasst, darüber hinaus umfassend:
ein Mittel, um das erste Signal zu empfangen und zu modifizieren, so dass die Betriebseigenschaften des Reifens, die durch das erste Signal dargestellt werden, an der Anzeige angezeigt werden können.

5. System nach Anspruch 1, wobei das unabhängige Mittel (80, 82, 87) ein erstes Transceivermodul (108), um das erste Signal von dem Reifen zu empfangen, einen Prozessor (106), um die Betriebseigenschaften des Reifens aus dem ersten Signal zu berechnen, und ein zweites Transceivermodul (116) umfasst, um die berechneten Betriebseigenschaften des Reifens als das zweite Signal auszugeben.

6. System nach Anspruch 5, wobei mindestens eine der Kommunikationseinrichtungen (28, 84, 104, 176) eine Telekommunikationseinrichtung gemäß dem Wireless Application Protocol (WAP) umfasst; und
wobei das zweite Transceivermodul die berechneten Betriebseigenschaften des Reifens als Bluetooth-Signal an die WAP-Telekommunikationseinrichtung ausgibt (116).

7. System nach Anspruch 1, wobei das unabhängige Mittel (80, 82, 87) eine Anzeige (128) umfasst, um vorformatierte Informationen, die den Druck und die Temperatur jedes Reifens des Fahrzeugs umfassen, anzuzeigen.

8. System nach Anspruch 1, wobei das unabhängige Mittel (80, 82, 87) ein Tastenmittel (130) umfasst, das von einem Benutzer betätigt werden kann, um die jeweiligen Positionen von jedem der Reifen an dem Fahrzeug festzulegen, und mindestens eine voreingestellte Grenze umfasst, um einen Warnalarm zu aktivieren, wenn er durch mindestens eine der Betriebseigenschaften von jedem der Reifen ausgelöst wird.

9. System nach einem der vorhergehenden Ansprüche, wobei das Sensormittel (20, 22, 24, 26, 90, 92, 94) geeignet ist, um in den Reifen integriert zu werden, im Inneren des Reifens vorgesehen ist oder mit der Felge, um die herum der Reifen montiert wird, gekoppelt ist.

10. System nach Anspruch 1, umfassend:
ein Reifentransceivermittel (16, 102), das zusammenwirkend mit dem Sensormittel arbeitet, um ein erstes Signal mit einer ersten Frequenz, das die Betriebseigenschaften des Reifens darstellt, auszugeben; und
ein Umwandlungsmittel (80), um das erste Signal zu empfangen, das erste Signal in ein zweites Signal mit einer zweiten Frequenz umzuwandeln, und das zweite Signal an eine Fernkommunikationseinrichtung auszugeben, die geeignet ist, um Signale mit der zweiten Frequenz zu empfangen.

11. System nach Anspruch 10, wobei die erste Frequenz 433 MHz beträgt und die zweite Frequenz 2,45 GHz beträgt.

12. System nach Anspruch 10, wobei das Umwandlungsmittel (80) ein erstes Transceivermodul (108), um die ersten Daten von dem Reifen zu empfangen, ein zweites Transceivermodul (116), um das zweite Signal als ein Bluetooth-Signal (BT-Signal) an ein Telekommunikationsmittel auf der Basis des Wireless Application Protocol (WAP) auszugeben, und einen Prozessor (106) umfasst, um die Reifeneigenschaften aus dem ersten Signal zu berechnen.

13. System nach Anspruch 10, wobei das Fahrzeug darüber hinaus umfasst:
ein Empfängermittel, um das zweite Signal von dem Umwandlungsmittel (80) oder das erste Signal von dem Transceivermittel (16, 102) zu empfangen; und
eine Anzeige (89, 128), um die Betriebseigenschaften des Reifens, die durch entweder das erste Signal oder das zweite Signal dargestellt sind, anzuzeigen.

14. System nach Anspruch 1, umfassend:
ein Reifentransceivermittel (16, 102), das zusammenwirkend mit dem Sensormittel (20, 22, 24, 26, 90, 92, 94) arbeitet, um ein Signal, das den Betriebswirksamkeitsgrad des Reifens darstellt, auszugeben, wobei das Signal ein erstes Kommunikationsprotokoll aufweist; und
ein Umwandlungsmittel (80), um das eine Signal zu empfangen und das eine Signal in ein weiteres Signal, das ein zweites Kommunikationsprotokoll aufweist, umzuwandeln, wobei das Umwandlungsmittel das weitere Signal an eine Telekommunikationseinrichtung ausgibt, die geeignet ist, um Signale, die das zweite Kommunikationsprotokoll aufweisen, zu empfangen.

15. System nach Anspruch 14, wobei das erste Kommunikationsprotokoll eine erste Frequenz umfasst und das zweite Kommunikationsprotokoll eine Bluetooth-Frequenz (BT-Frequenz) umfasst.

16. System nach Anspruch 14, wobei die erste Frequenz 433 MHz beträgt und die zweite Frequenz 2,45 GHz beträgt.

17. System nach Anspruch 14, wobei das Umwandlungsmittel (80) umfasst:
ein erstes Transceivermodul (108), um das eine Signal zu empfangen;
ein Prozessormittel (106), um die Betriebseigenschaften des Reifens aus Daten, die von dem einen Signal transportiert werden, zu berechnen; und
ein zweites Transceivermodul (116), um die berechneten Betriebseigenschaften des Reifens als das weitere Signal auszugeben.

18. Vorrichtung zum Umwandeln eines Signals mit einer Frequenz in ein weiteres Signal mit einer unterschiedlichen Frequenz in dem System nach dem Oberbegriff von Anspruch 1, wobei die Vorrichtung umfasst:
ein erstes Transceivermittel (108), um ein Signal mit einer Frequenz, das die Betriebseigenschaften von mindestens einem Reifen darstellt, zu empfangen und um das eine Signal in entsprechende Daten-Bits umzuwandeln;
ein Prozessormittel (106) zum Berechnen von Größen, die mit den Betriebseigenschaften des Reifens in Beziehung stehen, unter Verwendung der Daten-Bits; und
ein zweites Transceivermittel (116), um die Größen von dem Prozessormittel zu empfangen und die Größen in ein weiteres Signal mit einer weiteren Frequenz, das den Betriebseigenschaften des Reifens entspricht, umzuwandeln, wobei das zweite Transceivermittel das
weitere Signal an mindestens ein Kommunikationsmittel (28, 84, 104, 176) ausgibt, das geeignet ist, um das weitere Signal zu empfangen, **dadurch gekennzeichnet, dass** die Kommunikationsmittel gemäß einem Kommunikationsprotokoll arbeiten; und das Protokoll, das geeignet ist, um von den Kommunikationsmitteln verwendet zu werden, das Bluetooth (BT) oder Wireless Application Protocol (WAP) umfasst.

19. Vorrichtung nach Anspruch 18, wobei das zweite Transceivermittel (116) das weitere Signal an das Kommunikationsmittel (28, 84, 104, 176) nur nach einer Anfrage von dem Kommunikationsmittel ausgibt.

20. Vorrichtung nach Anspruch 18, wobei das weitere Signal ein Bluetooth-Signal (BT-Signal) umfasst.

21. Vorrichtung nach Anspruch 18, darüber hinaus umfassend:
ein Speichermittel (112), um das Betriebssystem zum Betreiben des Prozessormittels und von einem Benutzer konfigurierbare Parameter für Prozesse, die von dem Prozessormittel ausgeführt werden, um die Größen aus den Daten-Bits zu berechnen, zu speichern.

22. Vorrichtung nach Anspruch 18, darüber hinaus umfassend:
eine Anzeige (128), um die Betriebseigenschaften der Reifen anzuzeigen; und
ein Tastenmittel (130), um mindestens eine Alarmgrenze festzulegen und ein Alarmsignal auszugeben, wenn die Alarmgrenze durch mindestens eine der Betriebseigenschaften des Reifens ausgelöst wird.

23. Vorrichtung nach Anspruch 18, darüber hinaus umfassend:
ein Leistungssteuermittel (120), um den Umfang an Leistung, der verwendet wird, zu minimieren, indem das erste und zweite Transceivermittel nach jeweiligen vorbestimmten Zeitperioden abgeschaltet werden.

24. In einem Fahrzeug (6) mit mindestens einem Reifen (4), ein Verfahren mit den Schritten, das:
a) die Betriebseigenschaften des Reifens überwacht werden (34);
b) die überwachten Betriebseigenschaften des Reifens als ein erstes Signal, das ein erstes Kommunikationsprotokoll aufweist, ausgegeben werden (62, 64);
c) das erste Signal in entsprechende Daten-Bits umgewandelt wird (156, 160);
d) Größen, die mit den Betriebseigenschaften des Reifens in Beziehung stehen, unter Verwendung der Daten-Bits berechnet werden (162);
e) die berechneten Größen in ein zweites Signal, das ein zweites Kommunikationsprotokoll aufweist, umgewandelt werden; und
f) das zweite Signal an mindestens eine Kommunikationseinrichtung ausgegeben wird, die geeignet ist, um Signale, die das zweite Kommunikationsprotokoll aufweisen, zu empfangen (166, 168, 170),
**dadurch gekennzeichnet, dass**
das erste Kommunikationsprotokoll eine erste Frequenz umfasst und das zweite Kommunikationsprotokoll eine Bluetooth-Frequenz (BT-Frequenz) umfasst.

25. Verfahren nach Anspruch 24, wobei das erste Kommunikationsprotokoll eine 433 MHz-Frequenz umfasst und das zweite Kommunikationsprotokoll eine Bluetooth-Frequenz (BT-Frequenz) umfasst.

26. Verfahren nach Anspruch 24, das darüber hinaus den Schritt umfasst, dass:
die Betriebseigenschaften des Reifens, die durch das zweite Signal dargestellt werden, an einer Anzeige angezeigt werden.

27. Verfahren nach Anspruch 24, das darüber hinaus den Schritt umfasst, dass:
die Schritte c, d, e und f nach zumindest einer vorbestimmten Zeitperiode selektiv abgeschaltet werden.

28. Verfahren nach Anspruch 24, wobei ein Signal mit einem Kommunikationsprotokoll in ein weiteres Signal mit einem weiteren Kommunikationsprotokoll umgewandelt wird, mit den Schritten, dass:
das eine Signal mit dem einen Kommunikationsprotokoll von dem Reifen empfangen wird, wobei das eine Signal Informationen, die mit den Betriebseigenschaften des Reifens in Beziehung stehen, enthält; das eine Signal in entsprechende Daten-Bits umgewandelt wird;
die Daten-Bits dazu verwendet werden, Größen zu berechnen, die die Betriebseigenschaften des Reifens darstellen; und
die berechneten Größen in das weitere Signal mit dem weiteren Kommunikationsprotokoll umgewandelt werden, wobei das weitere Signal Informationen, die mit den Betriebseigenschaften des Reifens in Beziehung stehen, enthält.

29. Verfahren nach Anspruch 28, das darüber hinaus den Schritt umfasst, dass:
das weitere Signal an mindestens eine Kommunikationseinrichtung ausgegeben wird, die geeignet ist, um Signale mit dem zweiten Kommunikationsprotokoll zu empfangen.

30. System nach Anspruch 1, wobei das Fahrzeug (6) das Sensormittel (20, 22, 24, 26, 90, 92, 94), das an dem Reifen (4) montiert ist, eine Unterhaltungskonsole (84) in dem Fahrzeug, die einen Empfänger mit einer Anzeige aufweist, und ein Mittel umfasst, um ein Signal mit einer ersten Frequenz zu empfangen und das Signal mit der ersten Frequenz zu einem zweiten Signal mit einer Frequenz zu modifizieren, die verwendbar ist, um die Betriebseigenschaften des Reifens an der Anzeige der Konsole anzuzeigen.

31. System nach Anspruch 30, wobei die Unterhaltungskonsole (84) einen Radio mit einer Anzeige umfasst; und
wobei die Betriebseigenschaften des Reifens an der Anzeige des Radios angezeigt werden.

32. System nach Anspruch 30, das darüber hinaus umfasst:
ein Umwandlungsmittel (80, 82, 87), um das Signal mit der ersten Frequenz zu empfangen, das Signal mit der ersten Frequenz in ein zweites Signal mit einer zweiten Frequenz umzuwandeln und das zweite Signal an eine Ferntelekommunikationseinrichtung (28, 104) auszugeben, die geeignet ist, um Signale mit der zweiten Frequenz zu empfangen.

33. System nach Anspruch 32, wobei das Umwandlungsmittel (80, 82, 87) tragbar ist und von einem Fahrzeug zu einem anderen Fahrzeug verwendet werden kann.

## Revendications

1. Dans un véhicule (6) possédant au moins un pneumatique (4), système comprenant des moyens de capteurs (20, 22, 24, 26, 90, 92, 94) en relation de fonctionnement avec ledit pneumatique afin de surveiller les caractéristiques opérationnelles dudit pneumatique, des moyens d'émetteur/récepteur de pneumatique (16, 102) fonctionnant de manière coopérative avec lesdits moyens de capteurs afin de transmettre un premier signal possédant une première fréquence représentative des caractéristiques opérationnelles dudit pneumatique, et des moyens indépendants (80, 82, 87) fonctionnant séparément desdits moyens de capteurs afin de recevoir ledit premier signal, convertissant ledit premier signal en un second signal possédant une fréquence adaptable pour être utilisée par une pluralité de dispositifs de communication (28, 84, 104, 176), et transmettant le second signal converti à au moins un dispositif de communication, **caractérisé en ce que** lesdits dispositifs de communication fonctionnent selon un protocole de communication ; et ledit protocole adaptable pour être utilisé par lesdits dispositifs de communication comprend le Bluetooth (BT) ou le Protocole d'Application Sans fil (WAP).

2. Système selon la revendication 1, dans lequel ledit véhicule comprend un réseau CAN ("Controller Area Network") (85) ; et
dans lequel lesdits moyens indépendants (87) et ledit moyen d'émetteur/récepteur sont des parties dudit réseau CAN.

3. Système selon la revendication 1, dans lequel ledit véhicule comprend en outre :
un moyen de récepteur pouvant fonctionner selon un protocole de communication adaptable pour recevoir ledit second signal de la part desdits moyens indépendants (80, 82, 87) ; et
un afficheur (89) destiné à afficher les caractéristiques opérationnelles du pneumatique, représentatives dudit second signal.

4. Système selon la revendication 1, dans lequel ledit véhicule comprend une console de jeux (84) possédant un afficheur, comprenant en outre :
un moyen pour recevoir et modifier ledit premier signal de telle sorte que les caractéristiques opérationnelles du pneumatique représentées par ledit premier signal puissent être affichées sur ledit afficheur.

5. Système selon la revendication 1, dans lequel lesdits moyens indépendants (80, 82, 87) comprennent un premier module d'émetteur/récepteur (108) destiné à recevoir ledit premier signal de la part dudit pneumatique, un processeur (106) destiné à calculer les caractéristiques opérationnelles dudit pneumatique à partir dudit premier signal, et un second module d'émetteur/récepteur (116) destiné à transmettre les caractéristiques opérationnelles calculées dudit pneumatique sous forme dudit second signal.

6. Système selon la revendication 5, dans lequel au moins l'un desdits dispositifs de communication (28, 84, 104, 176) comprend un dispositif de télécommunication à Protocole d'Application Sans Fil (WAP) ; et
dans lequel ledit second module d'émetteur/récepteur transmet (116) les caractéristiques opérationnelles calculées dudit pneumatique sous forme d'un signal Bluetooth audit dispositif de télécommunication WAP.

7. Système selon la revendication 1, dans lequel lesdits moyens indépendants (80, 82, 87) comprennent un afficheur (128) destiné à afficher des informations pré-formatées comprenant la pression et la température de chaque pneumatique dudit véhicule.

8. Système selon la revendication 1, dans lequel lesdits moyens indépendants (80, 82, 87) comprennent des moyens à touches (130) pouvant être actionnés par un utilisateur afin de définir les positions respectives de chacun des pneumatiques dudit véhicule, et au moins une limite prédéfinie pour activer une alarme lorsqu'elle est déclenchée par au moins l'une des caractéristiques opérationnelles de chacun desdits pneumatiques.

9. Système selon l'une quelconque des revendications précédentes, dans lequel lesdits moyens de capteurs (20, 22, 24, 26, 90, 92, 94) sont adaptables afin d'être intégrés sur ledit pneumatique, prévus à l'intérieur dudit pneumatique, ou couplés à la jante sur laquelle ledit pneumatique est monté.

10. Système selon la revendication 1, comprenant
des moyens d'émetteur/récepteur de pneumatique (16, 102) fonctionnant de manière coopérative avec lesdits moyens de capteurs afin de transmettre un premier signal possédant une première fréquence représentative des caractéristiques opérationnelles dudit pneumatique ; et
un moyen convertisseur (80) destiné à recevoir ledit premier signal, à convertir ledit premier signal en un second signal possédant une seconde fréquence, et à transmettre ledit second signal à un dispositif de communication distant adapté pour recevoir des signaux de ladite seconde fréquence.

11. Système selon la revendication 10, dans lequel ladite première fréquence est de 433 MHz et ladite seconde fréquence est de 2,45 GHz.

12. Système selon la revendication 10, dans lequel ledit moyen convertisseur (80) comprend un premier module d'émetteur/récepteur (108) destiné à recevoir ledit premier signal de la part dudit pneumatique, un second module d'émetteur/récepteur (116) destiné à transmettre ledit second signal sous forme de signal Bluetooth (BT) à un moyen de télécommunication basé sur le Protocole d'Application Sans Fil (WAP), et un processeur (106) destiné à calculer les caractéristiques d'un pneumatique à partir dudit premier signal.

13. Système selon la revendication 10, dans lequel ledit véhicule comprend en outre :
un moyen de récepteur destiné à recevoir ledit second signal de la part dudit moyen de convertisseur (80) ou ledit premier signal de la part desdits moyens d'émetteur/récepteur (16, 102) ; et
un afficheur (89, 128) destiné à afficher les caractéristiques opérationnelles dudit pneumatique représentées par ledit premier signal ou ledit second signal.

14. Système selon la revendication 1, comprenant
des moyens d'émetteur/récepteur de pneumatique (16, 102) fonctionnant de manière coopérative avec lesdits moyens de capteurs (20, 22, 24, 26, 90, 92, 94) afin de transmettre un signal représentatif de l'efficacité opérationnelle dudit pneumatique, ledit signal possédant un premier protocole de communication ; et
un moyen convertisseur (80) destiné à recevoir ledit signal et à convertir ledit signal en un autre signal possédant un second protocole de communication, ledit moyen convertisseur transmettant ledit autre signal à un dispositif de télécommunication adapté pour recevoir des signaux possédant ledit second protocole de communication.

15. Système selon la revendication 14, dans lequel ledit premier protocole de communication comprend une première fréquence et ledit second protocole de communication comprend une fréquence Bluetooth (BT).

16. Système selon la revendication 14, dans lequel ladite première fréquence est de 433 MHz et ladite seconde fréquence est de 2,45 GHz.

17. Système selon la revendication 14, dans lequel ledit moyen convertisseur (80) comprend :
un premier module d'émetteur/récepteur (108) destiné à recevoir ledit signal ;
un moyen de processeur (106) destiné à calculer les caractéristiques opérationnelles dudit pneumatique à partir de données acheminées par ledit signal ; et
un second module d'émetteur/récepteur (116) destiné à transmettre les caractéristiques opérationnelles calculées dudit pneumatique sous la forme dudit autre signal.

18. Appareil pour convertir un signal d'une fréquence en un autre signal d'une fréquence différente dans le système selon le préambule de la revendication 1, ledit appareil comprenant :
un premier moyen d'émetteur/récepteur (108) destiné à recevoir un signal possédant une fréquence représentative des caractéristiques opérationnelles d'au moins un pneumatique, et à convertir ledit signal en bits de données correspondants ;
un moyen de processeur (106) destiné à calculer des quantités relatives aux caractéristiques opérationnelles dudit pneumatique en utilisant lesdits bits de données ; et
un second moyen d'émetteur/récepteur (116) destiné à recevoir lesdites quantités de la part dudit moyen de processeur, et à convertir lesdites quantités en un autre signal possédant une autre fréquence correspondant aux caractéristiques opérationnelles dudit pneumatique, ledit second moyen d'émetteur/récepteur transmettant ledit autre signal à au moins un moyen de communication (28, 84, 104, 176) adaptable pour recevoir ledit autre signal, **caractérisé en ce que** ledit moyen de communication fonctionne selon un protocole de communication ; et ledit protocole adaptable pour être utilisé par lesdits moyens de communication comprend le Bluetooth (BT) ou le Protocole d'Application Sans fil (WAP).

19. Appareil selon la revendication 18, dans lequel ledit second moyen d'émetteur/récepteur (116) transmet ledit autre signal auxdits moyens de communication (28, 84, 104, 176) uniquement en cas de demande de la part desdits moyens de communication.

20. Appareil selon la revendication 18, dans lequel ledit autre signal comprend un signal Bluetooth (BT).

21. Appareil selon la revendication 18, comprenant en outre :
un moyen de mémoire (112) destiné à stocker le système d'exploitation afin d'exécuter ledit moyen de processeur et des paramètres configurables par l'utilisateur pour des processus effectués par ledit moyen de processeur afin de calculer lesdites quantités à partir desdits bits de données.

22. Appareil selon la revendication 18, comprenant en outre :
un afficheur (128) destiné à afficher les caractéristiques opérationnelles des pneumatiques ; et
des moyens à touches (130) destinés à définir au moins une limite d'alarme afin de transmettre un signal d'alarme lorsque ladite limite d'alarme est déclenchée par au moins l'une des caractéristiques opérationnelles dudit pneumatique.

23. Appareil selon la revendication 18, comprenant en outre :
un moyen de contrôle de puissance (120) destiné à minimiser la quantité de puissance en coupant lesdits premier et second moyens d'émetteur/récepteur au bout de périodes de temps respectives prédéterminées.

24. Dans un véhicule (6) possédant au moins un pneumatique (4), procédé comprenant l'étape consistant à :
a) surveiller les caractéristiques opérationnelles dudit pneumatique (34) ;
b) transmettre les caractéristiques opérationnelles surveillées dudit pneumatique sous la forme d'un premier signal possédant un premier protocole de communication (62, 64) ;
c) convertir ledit premier signal en des bits de données correspondants (156, 160) ;
d) calculer des quantités relatives aux caractéristiques opérationnelles dudit pneumatique en utilisant lesdits bits de données (162) ;
e) convertir les quantités calculées en un second signal possédant un second protocole de communication ; et
f) transmettre ledit second signal à au moins un dispositif de communication adaptable pour recevoir des signaux possédant ledit second protocole de communication (166, 168, 170),
**caractérisé en ce que** ledit premier protocole de communication comprend une première fréquence et **en ce que** ledit second protocole de communication comprend une fréquence Bluetooth (BT).

25. Procédé selon la revendication 24, dans lequel ledit premier protocole de communication comprend une fréquence de 433 MHz et ledit second protocole de communication comprend une fréquence Bluetooth (BT).

26. Procédé selon la revendication 24, comprenant en outre l'étape consistant à :
afficher les caractéristiques opérationnelles dudit pneumatique représentées par ledit second signal sur un afficheur.

27. Procédé selon la revendication 24, comprenant en outre l'étape consistant à :
arrêter sélectivement lesdites étapes c, d, e et f après au moins une période de temps prédéterminée.

28. Procédé selon la revendication 24, dans lequel la conversion d'un signal d'un protocole de communication en un autre signal ayant un autre protocole de communication comprend les étapes consistant à :
recevoir ledit signal dudit protocole de communication de la part dudit pneumatique, ledit signal contenant des informations relatives aux caractéristiques opérationnelles dudit pneumatique ;
convertir ledit signal en bits de données correspondants ;
utiliser lesdits bits de données afin de calculer des quantités représentant les caractéristiques opérationnelles dudit pneumatique ; et
convertir les quantités calculées en ledit autre signal dudit autre protocole de communication, ledit autre signal contenant des informations relatives aux caractéristiques opérationnelles dudit pneumatique.

29. Procédé selon la revendication 28, comprenant en outre l'étape consistant à :
transmettre ledit autre signal à au moins un dispositif de communication adaptable pour recevoir des signaux dudit second protocole de communication.

30. Système selon la revendication 1, dans lequel ledit véhicule (6) comprend lesdits moyens de capteurs (20, 22, 24, 26, 90, 92, 94) montés sur ledit pneumatique (4), une console de jeux (84) située dans ledit véhicule et possédant un récepteur ayant un afficheur, des moyens pour recevoir un premier signal de fréquence et pour modifier ledit premier signal de fréquence en un second signal ayant une fréquence utilisable pour afficher les caractéristiques opérationnelles dudit pneumatique sur l'afficheur de ladite console.

31. Système selon la revendication 30, dans lequel ladite console de jeux (84) comprend une radio possédant un afficheur ; et
dans lequel lesdites caractéristiques opérationnelles du pneumatique sont affichées sur l'afficheur de ladite radio.

32. Système selon la revendication 30, comprenant en outre :
des moyens convertisseurs (80, 82, 87) destinés à recevoir ledit premier signal de fréquence, à convertir ledit premier signal de fréquence en un second signal possédant une seconde fréquence, et à transmettre ledit second signal à un dispositif de télécommunication distant (28, 104) adapté pour recevoir des signaux de ladite seconde fréquence.

33. Système selon la revendication 32, dans lequel lesdits moyens convertisseurs (80, 82, 87) sont portables et peuvent être utilisés d'un véhicule à un autre.
